Europäisches Patentamt

**European Patent Office**

**Office européen des brevets**

(11) Numéro de publication: **0 273 815 B1**

## FASCICULE DE BREVET EUROPEEN

(45) Date de publication de fascicule du brevet: **13.01.93**  (51) Int. Cl.⁵: **H04L 27/18**, H04L 27/26

(21) Numéro de dépôt: **87402761.8**

(22) Date de dépôt: **04.12.87**

(54) **Procédé et dispositif de modulation et de démodulation à plusieurs états, à niveau de protection ajustable.**

(30) Priorité: **05.12.86 FR 8617043**

(43) Date de publication de la demande:
**06.07.88 Bulletin 88/27**

(45) Mention de la délivrance du brevet:
**13.01.93 Bulletin 93/02**

(84) Etats contractants désignés:
**DE GB IT**

(56) Documents cités:
**EP-A- 0 144 245**
**EP-A- 0 171 778**
**GB-A- 2 137 456**
**US-A- 4 404 532**

(73) Titulaire: **THOMSON-CSF**
**51, Esplanade du Général de Gaulle**
**F-92800 Puteaux(FR)**

(72) Inventeur: **Laurent, Pierre André**
**THOMSON-CSF SCPI 19, avenue de Messine**
**F-75008 Paris(FR)**

(74) Mandataire: **Lincot, Georges et al**
**THOMSON-CSF SCPI B.P. 329**
**F-92402 COURBEVOIE CEDEX(FR)**

## Description

La présente invention concerne un procédé et un dispositif de modulation et de démodulation à niveau de protection ajustable.

Elle s'applique notamment à la réalisation d'émetteurs-récepteurs en radiotéléphonie numérique à bande étroite et elle concerne plus particulièrement les systèmes de modulation de fréquence ou de phase de type 4FSK à transitions progressive où chaque élément de signalisation encore appelé symbole, véhicule 2 bits d'information ou dibits ; FSK étant l'abréviation du terme anglo-saxon "Frequency Shift Keying".

Dans les systèmes de modulation connus de type 4FSK les éléments de signalisation ou symboles sont organisés sous la forme de dibits auxquels sont associées des fréquences de modulation. Par exemple, au dibit (0,0) est associé une fréquence F0, au dibit (0,1) est associée une fréquence F1, au dibit (1,1) est associée une fréquence F2 et au dibit (1,0) est associée une fréquence F3, ces fréquences étant toutes différentes les unes des autres.

La correspondance entre dibit et fréquence émise est déterminée de telle sorte qu'il n'y ait qu'un bit de différence entre les dibits associés à 2 fréquences adjacentes pour rendre minimal le taux d'erreur par bit à la réception.

Néanmoins, la présence de bruit qui accompagne normalement chaque dibit affecte généralement ce type de transmission, et ceci d'autant plus que les liaisons entre émetteur et récepteurs sont fortement bruitées. Dans cette circonstance les risques de confusion entre des fréquences qui sont adjacentes dans le schéma de modulation sont augmentés et la qualité de la restitution des messages originaux par le démodulateur est affectée.

Pour certaines transmissions, comme c'est le cas, par exemple, en transmission numérique de la parole, une confusion entre fréquences adjacentes n'est pas gênante car elle n'altère généralement que faiblement la restitution du signal, et un taux d'erreurs relativement important peut encore être accepté sans que cela nuise à l'intelligibilité de la parole en réception.

Par contre, pour d'autres transmissions il est impératif que la restitution des messages soit sinon parfaite au moins plus fidèle. Cela devient le cas, par exemple, pour la transmission de l'amplitude de référence en transmission de la parole, car toute altération se traduit par des fluctuations importantes du niveau de parole synthétique obtenu qui nuisent à la compréhension. La fragilité des champs binaires correspondants nécessite de les accompagner par des bits de redondance ou des mots de code autocorrecteur d'erreur, de type BCH par exemple, ou BCH désigne les codes connus sous la désignation Bose-Chaudhuri-Hocquenghem.

Cependant ces codes ont des possibilités qui sont souvent limitées à la correction et à la détection d'un nombre réduit d'erreurs, et au-dessus d'un nombre déterminé d'erreurs les transmissions doivent être reprises.

Le but de l'invention est de pallier les inconvénients précités.

A cet effet, l'invention a pour objet un procédé de modulation et démodulation à quatre états de fréquence de signaux binaires à niveau de protection ajustable consistant à séparer avant modulation les signaux binaires en signaux critiques et non critiques, caractérisé en ce qu'il consiste à grouper les signaux binaires non critiques par couples d'éléments binaires, à attribuer à chaque couple d'éléments binaires de signaux non critiques une fréquence correspondant à l'un de leur quatre états de combinaison possibles, et à adjoindre à chaque élément binaire des signaux critiques un élément binaire de valeur déterminée pour que la combinaison corresponde à deux états qui dans le plan des fréquences correspondent à deux fréquences les plus distantes possibles.

Le brevet US-A-4404532 décrit un procédé de modulation dans lequel sont alternativement transmis des signaux de données et des signaux de signalisation. Les signaux de signalisation étant plus critiques que les signaux de données, doivent en conséquence être transmis avec un taux d'erreur inférieur. Afin d'atteindre ce but, les signaux de signalisation y sont émis à l'aide d'un premier type de modulation et les signaux de données à l'aide d'un second type de modulation ayant un nombre d'états supérieur au premier type.

En contraste avec l'enseignement fourni par ce brevet, la présente invention se distingue essentiellement par le fait qu'elle ne fait usage que d'une modulation de fréquence à quatre états à la fois pour les données critiques et non critiques.

D'autres caractéristiques et avantages de l'invention apparaîtront ci-après de la description qui suit faite en regard des dessins annexés qui représentent :

- la figure 1 un schéma de modulation connue à quatre états de variation de phase
- la figure 2 un diagramme explicatif du principe de modulation mis en oeuvre par l'invention
- la figure 3 un organigramme reflétant les différentes étapes du procédé selon l'invention
- les figures 4 et 5 les schémas de réalisation d'un modulation et d'un démodulateur selon l'invention.

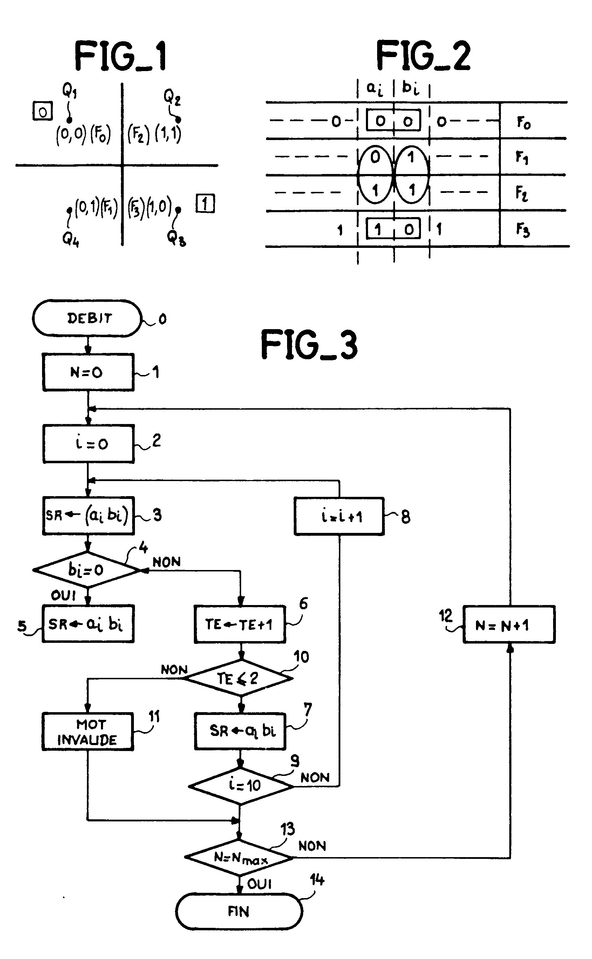

Suivant le principe de modulation connue à 4 états de variation de phase qui est représenté à la figure 1, les symboles sont codés en associant à chaque état deux éléments binaires ai et bi pour constituer ce qui encore est appelé un dibit. Dans la représentation de la figure 1, les 4 états sont figurés en 4 sommets Q1, Q2, Q3, Q4 d'un carré, qui correspondent respectivement aux dibits (0,0), (0, 1), (1, 1), (1, 0). A chacun de ces états est associée une fréquence F0, F1, F2 ou F3 telle que, par exemple, pour le dibit (0,0) le modulateur transmettra une fréquence F0 = Fc - 3 $\frac{\Delta F}{2}$ , pour le dibit (0, 1) il transmettra une fréquence F1 = Fc - $\frac{\Delta F}{2}$ , pour le dibit (1,1) il transmettra la fréquence F2 = Fc + $\frac{\Delta F}{2}$  et pour le dibit (1,0) il transmettra la fréquence

$$F3 = Fc + \frac{3\Delta F}{2} \ .$$

Suivant ce type de modulation, la correspondance entre dibits et fréquences est déterminée pour qu'il n'y ait qu'un bit de différence entre les dibits associés aux fréquences adjacentes, ceci permet de rendre minimal le taux d'erreur a la réception. Cependant pour éviter que des erreurs de décodage de dibits aient lieu à la réception lorsque les liaisons sont fortement perturbées chacun des bits des messages transmis à protéger plus particulièrement sont codés dans le procédé selon l'invention en dibits tels que pour un bit (0) par exemple, corresponde le dibit (0,0) avec la fréquence F0 et qu'à un bit (1) corresponde un dibit (1,0) avec la fréquence d'émission F3. Dans ce procédé, les fréquences F0 et F1, d'une part, et F2 et F3, d'autre part, sont considérées comme équivalentes. A un bit (0) correspondent alors les fréquences F0 et F1 et à un bit (1) correspondent les fréquences F2 et F3. Le procédé permet de diminuer considérablement la probabilité d'erreur à la réception puisque la transformation d'un bit (1) en un bit (0) et vice versa revient à confondre les deux fréquences extrêmes utilisées, ce qui est, pour un rapport signal/bruit donné, beaucoup plus rare que la confusion de deux fréquences adjacentes. Une illustration du procédé selon l'invention est représentée à la figure 2 où les quatre configurations possibles de réception de dibits ai et bi sont représentées avec les fréquences F0, F1, F2 et F3 correspondantes. Sur cette figure, les combinaisons des bits (ai, bi) = (0,0) et (ai, bi) = (1,0) correspondent bien aux fréquences F0 et F3 les plus éloignées dans la répartition des fréquences et les combinaisons de dibits (ai, bi) = (0,1) et (ai, bi) = (1,1) correspondent aux fréquences intermédiaires F1 et F2. Le plan de codage de la figure 2 permet de considérer chacun des couples (ai, bi) comme étant formés par un bit d'information ai auquel est adjoint un bit de qualité bi. En effet, dans les deux combinaisons (ai, bi) = (0,0) et (ai, bi) = (0,1) seul le bit bi change alors que le bit ai conserve la valeur ai = 0. Egalement on constate que dans les deux combinaisons (ai, bi) = (1,1) et (ai bi) = (1,0) seul le bit bi change alors que le bit ai conserve la valeur ai = 1. Par conséquent, en réception si dans le dibit reçu le bit bi = 1 la transmission aura été mauvaise et dans ce cas aucune décision ferme ne pourra être prise sur la valeur du bit d'information ai correspondant reçu. Le bit ai correspondant décodé pourra alors être effacé pour être éventuellement reconstitué à l'aide par exemple d'un code autocorrecteur d'erreur du type BCH par exemple.

Un mode de réalisation de ce procédé est représenté par des étapes 1 à 14 de l'organigramme de la figure 3.

Pour l'exécution de ce procédé, on suppose que le démodulateur du dispositif de réception comprend de façon connue, un compteur de mots "N", un compteur de bits "i", un registre de mémorisation de mots "SR" et un totalisateur d'effacements "TE". Eventuellement ceux-ci pourront être formés par les registres correspondant d'un microprocesseur ou des cases mémoire de la mémoire vive qui lui est associée.

Dans l'organigramme représenté chaque message reçu par le démodulateur est composé de N mots de dix dibits (ai, bi) et le code correcteur est supposé capable de corriger au plus deux effacements. En début de réception le compteur de mots "N" est vide et le compteur de bits "i" est également vide comme ceci est représenté aux étapes 1 et 2. Le premier dibit reçu est figuré à l'étape 3 et il est mémorisé dans le registre "SR" par exécution des étapes 4 et 5 à condition qu'à l'étape 4 le bit bi soit nul. Si à l'étape 4, le bit bi n'est pas nul, le contenu du compteur totalisateur d'effacements "TE" est augmenté d'une unité à l'étape 6 et le dibit (ai, bi) est mémorisé dans le registre SP à l'étape 7. Le procédé retourne ensuite à l'étape 3 pour accueillir le dibit (ai, bi) suivant après avoir augmenté d'une unité le contenu du compteur de dibits "i" à l'étape 8. Le processus est renouvelé de cette façon jusqu'à l'étape 9 tant que le nombre de dibits reçu n'a pas dépassé 10 et tant que le nombre d'effacements totalisés par le compteur totalisateur d'effacements "TE" à l'étape 6 n'a pas dépassé 2. Ce contrôle qui a été utilisé à l'étape 10 permet de déclarer le mot reçu invalide à l'étape 11 si le compteur totalisateur "TE" a dépassé la valeur 2 et le retour à l'étape 2 pour la démodulation du mot suivant, en augmentant de une unité le contenu du compteur de mots N à l'étape 12. Le procédé s'arrête à l'exécution des étapes 13 et 14 lorsque le nombre de mots reçus a atteint le nombre total N max de mots codés suivant ce procédé et contenus dans la trame du message transmis.

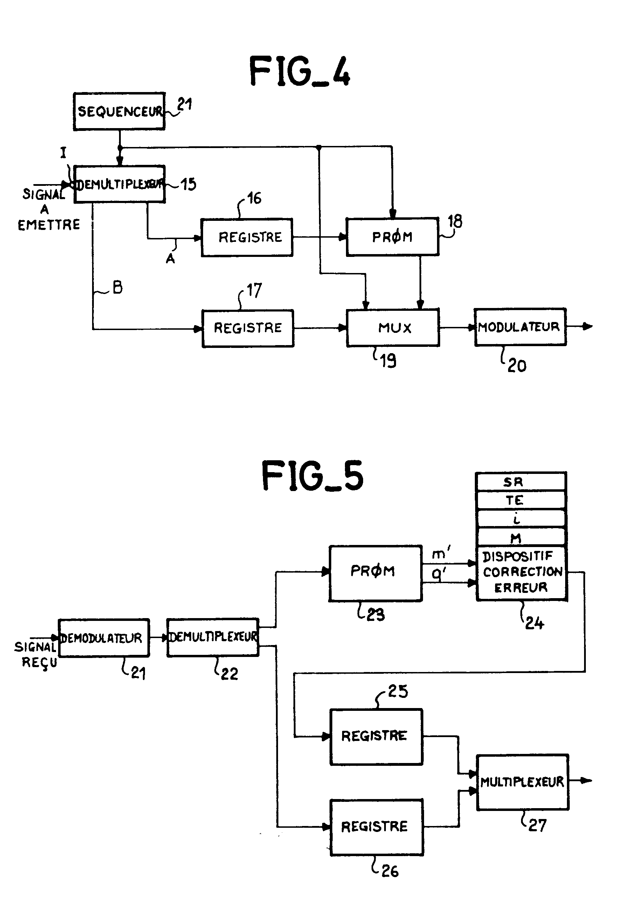

Un schéma de réalisation d'un dispositif de modulation conforme à l'invention est représentée à la figure 4, il comprend un démultiplexeur 15, des registres de formation de mots 16 et 17, une mémoire morte programmable PROM 18 permettant l'adjonction de bits de redondance autocorrecteurs d'erreurs, un multiplexeur 19, un modulateur 20 et un séquenceur 21. Les informations à transmettre sont appliquées sur une entrée I du démultiplexeur 15 pour être réparties sur deux voies distinctes A et B. Les informations fragiles sont transmises sur la voie A dans les registres de formation de mots 16. Les informations de mots non fragiles sont transmises par la voie B dans les registres de formation de mots 17. La mémoire morte programmable PROM 18 est adressée par les mots contenus dans les registres de formation de mots 16, elle contient pour chaque mot des codes de correction correspondants. Le multiplexeur 19 possède deux entrées reliées respectivement, l'une à la sortie de registre de formation de mots 17, l'autre à la sortie de la mémoire morte programmable PROM 18. Ce multiplexeur 19 est commandé par le séquenceur 21 pour appliquer à l'entrée du modulateur 20 les mots provenant soit de la mémoire 18, soit des registres de formation de mots 17. Le modulateur 20 transmet de façon connue les 4 fréquences F0 à F3 définies par les plans de modulation des figures 1 et 2.

Un schéma de réalisation d'un dispositif de démodulation conforme à l'invention est représenté à la figure 5. Ce dispositif comprend, un démodulateur 21bis, un démultiplexeur 22, une première voie de traitement constituée d'une mémoire morte programmable PROM 23 et d'un circuit de correction d'erreurs et d'effacements 24 couplé à un registre parallèle série 25. Il comprend également une deuxième voie de traitement constituée d'un registre parallèle série 26. Les deux voies de traitement sont multiplexées au travers d'un multiplexeur 27. Tous les messages reçus par le démodulateur 21bis sont constitués soit d'informations fragiles ou d'informations non fragiles utilisant un plan de fréquences composés des quatre fréquences F0 à F3 définies précédemment. Le démultiplexeur 22 assure la sélection dans les trames de messages reçus des informations fragiles et non fragiles pour les appliquer, alternativement selon le cas, à l'entrée de la mémoire morte programmable 23 ou directement dans les registres 26. Dans les deux cas les symboles composant les messages reçus sont constitués par des dibits correspondant au plan de modulation de la figure 2. Dans le cas des informations fragiles, les dibits correspondants sont séparés par la mémoire morte programmable 23 en bits d'information m' et en bit de qualité q'. Comme ces bits sont protégés et sont normalement émis suivant une modulation de type binaire, utilisant les fréquences extrêmes F0 et F3 du plan de modulation, ces dibits appartiennent à des mots de codes correcteurs d'erreurs qui sont lus dans la mémoire morte programmable 18 du modulateur de la figure 4. Ces codes correcteurs d'erreurs corrigent de façon connue à la fois les bits non effacés et les bits effacés, définis dans le plan de modulation des informations fragiles et permettent de reconstituer la valeur des symboles transmis dont on connait la position dans le message mais dont la qualité est reconnue douteuse. En retournant au procédé décrit à la figure 3 on conçoit que ces codes correcteurs d'erreurs permettront de reconstituer au moins 2 bits effacés s'il n'est constaté aucune erreur dans le code des messages reçus.

Bien naturellement, le principe de l'invention reste applicable à des modulations plus compliquées. Par exemple, à partir d'une modulation de base capable d'acheminer directement des symboles de 8 bits (octets) on peut concevoir qu'il est possible d'obtenir des modulations plus protégées en n'utilisant parmi les 256 formes d'ondes possibles, qu'un sous-ensemble de 128 formes d'ondes choisies, comme étant les plus distantes possibles (symbole de 7 bits) ou encore de 64 formes d'ondes (symbole de 6 bits) etc... ou enfin de 2 seulement (1 bit par symbole) pour réaliser la protection maximale. Dans tous ces cas en associant des symboles à des codes correcteurs on décidera comme précédemment qu'un symbole est valide, si la décision du démodulateur montre qu'il appartient au sous-ensemble choisi (éventuellement à un voisin proche d'un symbole dudit sous ensemble) et on l'effacera dans le cas contraire.

**Revendications**

1. Procédé de modulation et démodulation à quatre états de fréquence de signaux binaires à niveau de protection ajustable consistant a séparer (15) avant modulation les signaux binaires en signaux critiques et non critiques, caractérisé en ce qu'il consiste à grouper les signaux binaires non critiques par couples d'éléments binaires ($a_i$, $b_i$), à attribuer à chaque couple d'éléments binaires de signaux non critiques une fréquence ($F_0$, $F_1$, $F_2$, $F_3$) correspondant à l'un de leur quatre états de combinaison possibles, et à adjoindre à chaque élément binaire ($a_i$) des signaux critiques un élément binaire ($b_i$) de valeur (1 ou 0) déterminée pour que la combinaison ($a_i$, $b_i$) corresponde à deux états qui dans le plan des fréquences ($F_0$ ... $F_3$) correspondent à deux fréquences les plus distantes possibles.

2. Procédé selon la revendication 1, caractérisé en ce que les signaux binaires critiques $a_i$ sont accompagnés de signaux binaires $b_i$ permettant de construire un code autocorrecteurs d'erreurs.

3. Procédé selon les revendications 1 et 2, caractérisé en ce que les quatre fréquences de modulation F0, F1, F2, F3 sont définies par rapport à une fréquence centrale Fc telle que :

$$F0 = Fc - \frac{3\Delta F}{2} \quad ;$$

$$F1 = Fc - \frac{\Delta F}{2} \; ; F2 = Fc + \frac{\Delta F}{2} \; \text{et}$$

$$F3 = Fc + \frac{3\Delta F}{2}.$$

4. Procédé selon l'une quelconque des revendications 1 à 3, caractérisé en ce qu'il consiste à coder chaque signal binaire à transmettre par couple d'éléments binaires pour constituer un bit d'information (ai) et un bit de qualité (bi), a mémoriser (5, 7) chaque couple reçu, et à tester (4) le bit de qualité de chaque dibit reçu pour vérifier (10, 11) la validité de chacun des mots *critiques transmis*.

5. Dispositif de modulation et de démodulation à quatre états de fréquence de signaux binaires à niveau de protection ajustable caractérisé en ce que le dispositif de modulation comprend un démultiplexeur (15) des signaux binaires à moduler pour séparer les signaux binaires en signaux critiques et non critiques, un premier et un deuxième registre de formation de mots (16, 17) chargés respectivement par les signaux critiques et non critiques, une mémoire morte (18) adressée par le premier registre de formation de mot et contenant pour chaque mot un code autocorrecteur d'erreur, un circuit multiplexeur (19) couplé à un modulateur (20) pour transmettre au moyen de 4 fréquences différentes les mots provenant soit de la mémoire morte (18) soit du deuxième registre de formation de mot (17).

6. *Dispositif selon la revendication 5, caractérisé en ce qu'il com*prend un démodulateur (21) couplé à un démultiplexeur (22) pour séparer les dibits reçus représentant les informations critiques et non critiques, une mémoire morte programmable (23) pour séparer, dans les couples d'éléments binaires reçus des informations critiques, les bits d'information (ai) et les bits de qualité (bi), la mémoire morte

programmable (23) étant couplée à un circuit de correction d'erreurs et d'effacements (24) pour reconstituer la valeur des symboles transmis dont la position dans le message est connue mais dont la qualité est douteuse.

**Claims**

1. A modulation and demodulation process having four binary signal frequency states with an adjustable protection level, consisting of separating (15) the binary signals into critical and non-critical signals before modulation, characterised in that it consists of grouping the non-critical signals in pairs of bits ($a_i$, $b_i$), of attributing to each pair of bits of non-critical signals a frequency ($F_0$, $F_1$, $F_2$, $F_3$) corresponding to one of their four possible combination states, and of adding to each bit ($a_i$) of critical signals a bit ($b_i$) with a predetermined value (1 or 0) such that the combination ($a_i$,$b_i$) corresponds to two states which in the plane of frequencies ($F_0$ ... $F_3$) correspond to two frequencies as far apart as possible.

2. A process according to Claim 1, characterised in that the critical binary signals ($a_i$) are accompanied by binary signals ($b_i$) making it possible to construct an error correction code.

3. A process according to Claims 1 and 2, characterised in that the four modulation frequencies $F_0$, $F_1$, $F_2$, $F_3$ are defined in relation to a central frequency $F_c$ such that:

$$F_0 = F_c - \frac{3\Delta F}{2} \quad :$$

$$F_1 = F_0 - \frac{\Delta F}{2} \; : F_2 = F_c + \frac{\Delta F}{2} \; \text{and}$$

$$F_3 = F_c + \frac{3\Delta F}{2}.$$

4. A process according to any one of Claims 1 to 3, characterised in that it consists of encoding each binary signal to be transmitted in pairs of bits in order to constitute one data bit ($a_i$) and one quality bit ($b_i$), of storing (5, 7) each pair received, and testing (4) the quality bit of each dibit received in order to check (10, 11) the validity of each of the critical words transmitted.

5. A modulation and demodulation device having four binary signal frequency states with an adjustable protection level, characterised in that the modulation device comprises a demultiplexer (15) for the binary signals to be modulated in order to separate the binary signals into critical and non-critical signals, a first and a second word-formation register (16, 17) charged respectively by the critical and non-critical signals, an ROM (18) addressed by the first word-formation register and containing, for each word, an error correction code, and a multiplexing circuit (19) coupled to a modulator (20) in order to transmit by means of four different frequencies the words originating either from the ROM (18) or the second word-formation register (17).

6. A device according to Claim 5, characterised in that it comprises a demodulator (21) coupled to a demultiplexer (22) for separating the dibits received representing the critical and non-critical data, a PROM (23) for separating out the data bits ($a_i$) and the quality bits ($b_i$) from the pairs of bits of critical data received, the PROM (23) being coupled to an error correction and deletion circuit (24) in order to reconstitute the value of the symbols transmitted, the position of which in the message is known but the quality of which is in doubt.

**Patentansprüche**

1. Verfahren zur Modulation und Demodulation von Binärsignalen auf vier Frequenzzuständen und bei einem einstellbaren Schutzgrad, bei welchem vor der Modulation die Binärsignale in kritische und nichtkritische Signale getrennt werden (15), dadurch gekennzeichnet, daß die nichtkritischen Binärsignale in Paaren von Binärelementen ($a_i$, $b_i$) gruppiert werden, jedem Paar von Binärelementen nichtkritischer Signale eine Frequenz ($F_0$, $F_1$, $F_2$, $F_3$) zugeordnet wird, die einem ihrer vier möglichen Kombinationszustände entspricht, und jedem Binärelement ($a_i$) der kritischen Signale ein Binärelement ($b_i$) von bestimmtem Wert (1 oder 0) hinzugefügt wird, der so festgelegt ist, daß die Kombination ($a_i$, $b_i$) zwei Zuständen entspricht, die in der Ebene der Frequenzen ($F_0$ ... $F_3$) zwei Frequenzen entsprechen, die möglichst weit voneinander entfernt sind.

2. Verfahren nach Anspruch 1, dadurch gekennzeichnet, daß die kritischen Binärsignale $a_i$ von Binärsignalen $b_i$ begleitet werden, die es ermöglichen, einen Autofehlerkorrekturcode aufzubauen.

3. Verfahren nach den Ansprüchen 1 und 2, dadurch gekennzeichnet, daß die vier Modulationsfrequenzen F0, F1, F2, F3 in bezug auf eine zentrale Frequenz Fc in folgender Weise definiert sind:

$$F0 = Fc - \frac{3\Delta F}{2} \quad :$$

$$F1 = Fc - \frac{\Delta F}{2} : F2 = Fc + \frac{\Delta F}{2} \text{ und}$$

$$F3 = Fc + \frac{3\Delta F}{2}.$$

4. Verfahren nach einem der Ansprüche 1 bis 3, dadurch gekennzeichnet, daß jedes zu übertragende Binärsignal als Paar von Binärelementen codiert wird, um ein Informationsbit (ai) und ein Qualitätsbit (bi) zu bilden, jedes empfangene Paar gespeichert wird (5, 7) und das Qualitätsbit jedes empfangenen Doppelbits getestet wird (4), um die Gültigkeit jedes der übertragenen kritischen Worte zu überprüfen (10, 11).

5. Vorrichtung zur Modulation und Demodulation von Binärsignalen auf vier Frequenzzuständen bei einstellbarem Schutzgrad, dadurch gekennzeichnet, daß die Modulationsvorrichtung einen Demultiplexer (15) für die zu modulierenden Binärsignale aufweist, um die Binärsignale in kritische Signale und nichtkritische Signale zu trennen, mit einem ersten sowie einem zweiten Register (16, 17) zur Wortbildung, von denen das erste durch die kritischen und das zweite durch die nichtkritischen Signale geladen wird, mit einem Festwertspeicher (18), der durch das erste Register zur Wortbildung adressiert wird und für jedes Wort einen Autofehlerkorrekturcode enthält, und einer Multiplexerschaltung (19), die an einen Modulator (20) angekoppelt ist, um mittels vier verschiedenen Frequenzen die Worte zu übertragen, die entweder

aus dem Festwertspeicher (18) oder aus dem zweiten Register (17) zur Wortbildung stammen.

6. Vorrichtung nach Anspruch 5, dadurch gekennzeichnet, daß sie einen Demodulator (21) umfaßt, der an einen Demultiplexer (22) angekoppelt ist, um die empfangenen Doppelbits zu trennen, die kritische und nichtkritische Informationen darstellen, mit einem programmierbaren Festwertspeicher (23), um in den empfangenen Paaren von Binärelementen der kriti-

schen Informationen die Informationsbits ($a_i$) von den Qualitätsbits ($b_i$) zu trennen, wobei der programmierbare Festwertspeicher (23) an eine Schaltung (24) zur Fehlerkorrektur und Löschung angekoppelt ist, um den Wert von übertragenen Symbolen, deren Lage in der Nachricht bekannt, deren Qualität jedoch zweifelhaft ist, wiederherzustellen.

# FIG_1

$Q_1$

$\boxed{0}$

$(0,0)\,(F_0)$    $(F_2)\,(1,1)$

$Q_2$

$(0,1)(F_1)$   $(F_3)(1,0)$

$\boxed{1}$

$Q_4$      $Q_3$

# FIG_2

| | $a_i$ | $b_i$ | | |
|---|---|---|---|---|
| $-\ -\ -\ 0\ -$ | $\boxed{0}$ | $\boxed{0}$ | $0\ -\ -\ -$ | $F_0$ |
| $-\ -\ -\ -$ | $0$ | $1$ | $-\ -\ -\ -$ | $F_1$ |
| $-\ -\ -\ -$ | $1$ | $1$ | $-\ -\ -$ | $F_l$ |
| $1$ | $\boxed{1}$ | $\boxed{0}$ | $1$ | $F_3$ |

# FIG_3

DEBIT   0

$N = 0$   1

$i = 0$   2

$SR \leftarrow (a_i\, b_i)$   3

$b_i = 0$   4   NON

$i = i+1$   8

OUI

5   $SR \leftarrow a_i\, b_i$

$TE \leftarrow TE+1$   6

12   $N = N+1$

$TE \leqslant 2$   10   NON

MOT INVALIDE   11

$SR \leftarrow a_l\, b_i$   7

$i = 10$   9   NON

$N = N_{max}$   13   NON

OUI

FIN   14

# FIG_4

# FIG_5